# FASCICULE DE BREVET EUROPEEN

(11) **EP 0 921 026 B1**
(45) Date de publication et mention de la délivrance du brevet: **21.04.2004**
(21) Numéro de dépôt: 98204090.9
(22) Date de dépôt: 07.12.1998
(51) Int. Cl.: B60K 15/035

(54) **Circuit de dégazage pour réservoir à liquide**
Entlüftungsleitung für Flüssigkeitsbehälter
Vapour venting circuit for liquid reservoir

(30) Priorité: 08.12.1997 FR 9715679
(43) Date de publication de la demande: 09.06.1999
(73) Titulaire: Inergy Automotive Systems Research (SA), 1120 Bruxelles (BE)
(72) Inventeur: Besnard, Pierric, 53000 Laval (FR); Iribarne, Alain, 53000 Laval (FR); Ganachaud, Patrick, 53000 Laval (FR)
(74) Mandataire: Decamps, Alain René François

(56) Documents cités:
- DE-A- 2 223 205
- FR-A- 2 561 594
- GB-A- 2 254 847
- US-A- 3 800 978
- US-A- 4 700 864

## Description

La présente invention concerne un circuit de dégazage pour réservoir à liquide, en particulier pour réservoir à carburant équipant un véhicule automobile. Les réservoirs à liquide, en particulier les réservoirs à carburant pour véhicules automobiles, comportent généralement un circuit de dégazage. Ce circuit permet l'évacuation de l'air et des gaz présent dans le réservoir lors du remplissage. Il aboutit généralement dans la partie supérieure du conduit de remplissage. Il comporte souvent une capacité de séparation liquide / gaz. Celle-ci est parfois pourvue d'un dispositif de purge. DE 22 23 205 montre un tel circuit de dégazage selon le préambule de la revendication 1.

Pour des raisons d'encombrement et, en particulier, de conception interne du véhicule, ce circuit de dégazage peut comporter une section en forme de siphon. Ce siphon est susceptible de se remplir de liquide lors d'un remplissage complet du réservoir ou en utilisation, lors d'une inclinaison ou à la création de vagues dans le réservoir. Ce liquide peut être refoulé vers la capacité de séparation liquide / gaz et provoquer des éjections lors du remplissage du réservoir et de l'évacuation des gaz qu'il contient. Ces éjections sont indésirables pour la personne qui effectue le remplissage. Elles peuvent en outre porter atteinte à la sécurité et à l'environnement et vont à l'encontre des préoccupations actuelles en matière d'émission d'hydrocarbures par les véhicules automobiles.

Le refoulement du liquide contenu dans le siphon nécessite par ailleurs une pression qui est fonction de la hauteur de liquide. Cette pression peut, si elle est trop élevée, provoquer avant même qu'elle ne soit atteinte, le déclenchement prématuré du dispositif (par exemple pistolet) de remplissage et ce faisant, une interruption non désirée du remplissage.

Il est donc nécessaire de permettre l'évacuation du liquide contenu dans la section en forme de siphon du conduit de remplissage, en ne provoquant ni éjections, ni déclenchement non désiré du dispositif de remplissage.

Selon la demande de brevet français 2561594, la partie basse du siphon d'un conduit de dégazage d'un réservoir à carburant est reliée à ce réservoir à un niveau inférieur au niveau maximum de remplissage du réservoir, par un orifice de faible section. Lorsque le niveau de liquide dans le réservoir descend sous celui du point bas du siphon, le carburant éventuellement présent dans celui-ci s'évacue vers le réservoir. Le circuit de dégazage est donc entièrement dégagé de liquide avant chaque remplissage. Cette solution n'est toutefois pas envisageable pour toutes les géométries et tous les emplacements du siphon. En outre, mettant en communication le conduit de dégazage avec le réservoir à un niveau inférieur au niveau maximum de liquide, elle présente le risque de reflux de liquide vers le conduit de dégazage et, partant, les risques susmentionnés d'éjections de carburant. Lorsqu'une vanne à flotteur est adjointe pour résoudre le problème, le dispositif concerné est rendu plus complexe pour un résultat minimum et ne permet plus l'évacuation du carburant contenu dans le circuit de dégazage durant la fin du remplissage, laissant ainsi subsister le risque d'éjections de carburant à ce moment.

L'invention a pour objet de proposer un circuit de dégazage d'un réservoir à liquide comprenant une section en forme de siphon et une capacité de séparation liquide / gaz munie d'un dispositif de purge à conception améliorée et ne nécessitant pas le recours à un clapet ou à tout autre mécanisme destiné à assurer le drainage du liquide éventuellement contenu dans le siphon.

L'invention concerne dès lors un circuit de dégazage pour réservoir à liquide comprenant un conduit de dégazage reliant la partie supérieure du réservoir à un point plus élevé, proche de l'extrémité supérieure du conduit de remplissage, via une section en forme de siphon et une capacité de séparation liquide / gaz munie à sa base d'un dispositif de purge de la phase liquide présente dans le conduit de dégazage, dans lequel le dispositif de purge met en communication le conduit de dégazage et le conduit de remplissage et est associé à un dispositif créant un effet Venturi favorisant, lors du remplissage, la purge de la phase liquide présente dans le conduit de dégazage.

Par circuit de dégazage, on entend désigner le dispositif qui lors du remplissage du réservoir, permet l'évacuation des gaz qu'il contient.

Le circuit de dégazage peut être externe ou, en tout ou en partie, interne au réservoir à liquide.

Le circuit de dégazage est destiné à un réservoir à liquide quelconque. Il équipe toutefois avantageusement un réservoir pour véhicule automobile. D'excellents résultats ont été obtenus lorsque le réservoir à liquide est un réservoir à carburant.

Le circuit de dégazage peut être constitué de un ou de plusieurs éléments en un ou plusieurs matériaux, et en particulier en matière thermoplastique. De manière avantageuse, le conduit de dégazage est à base d'une ou de plusieurs matières thermoplastiques. Par matière thermoplastique, on entend désigner un ou plusieurs polymères thermoplastiques. Les polymères peuvent être des homopolymères, copolymères ou leurs mélanges. A titre de tels polymères, on peut retenir par exemple des polyoléfines, des polyamides ou des polymères fluorés. De bons résultats ont été obtenus à partir de polyéthylène haute densité.

A la matière thermoplastique peuvent évidemment être ajoutés un ou plusieurs additifs usuels tels que antioxydants, stabilisants, pigments ou autres.

La section en forme de siphon du circuit de dégazage dispose d'une géométrie, d'une configuration et de dimensions adaptées de manière connue à l'encombrement et à la conception de l'environnement externe au réservoir, de même qu'aux exigences de fonctionnement.

La capacité de séparation liquide / gaz est voisine du conduit de remplissage. Elle peut avantageusement être moulée d'une pièce avec celui-ci. En général, la communication entre le conduit de dégazage et le conduit de remplissage est réalisée par un orifice à la base de la capacité de séparation liquide / gaz.

Le dispositif de purge est placé à la base de la capacité de séparation liquide / vapeur. De manière avantageuse, il est placé à un niveau supérieur au niveau maximum de remplissage du réservoir, permettant ainsi de purger le conduit de dégazage même lorsque le réservoir est rempli au maximum.

Le dispositif créant un effet Venturi peut être réalisé de toute manière connue. Il consiste avantageusement en un rétrécissement du conduit de remplissage au niveau de sa communication avec le conduit de dégazage.

Des résultats intéressants ont été obtenus lorsque le conduit de dégazage comprend en outre au moins un clapet à flotteur. Ce type de clapet comporte généralement une enceinte qui laisse passer les gaz et une pièce mobile qui coulisse dans celle-ci pour venir obturer un orifice de connexion entre deux cavités. Lorsque le liquide monte dans la cavité où est située la pièce mobile et qu'il l'atteint, elle se met à flotter à la surface du liquide et en coulissant dans l'enceinte, vient obturer l'orifice de connexion avec l'autre cavité. Un dispositif assurant l'étanchéité du clapet dans sa position fermée lui est préférentiellement associé.

Un clapet à flotteur peut avantageusement être placé à la partie supérieure de la capacité de séparation liquide / gaz ou entre cette partie supérieure de la capacité de séparation liquide / gaz et la liaison supérieure entre le conduit de dégazage et le conduit de remplissage. Ainsi, on réduit encore le risque d'éjections de liquide lors du remplissage du réservoir et de l'évacuation des gaz qu'il contient.

Des résultats favorables ont été obtenus en plaçant un clapet à flotteur à ou près de l'extrémité du conduit de dégazage du côté réservoir. Ainsi, on réduit le risque de remplissage du siphon par du liquide lors du remplissage complet du réservoir ou en utilisation, lors d'une inclinaison ou à la formation de vagues dans le réservoir.

Le circuit de dégazage tel que décrit ci-dessus garantit le remplissage du réservoir à liquide sans éjections ni déclenchement non désiré du dispositif de remplissage. Il est donc avantageusement associé à un réservoir à liquide.

L'invention concerne dès lors également un réservoir à liquide équipé d'un circuit de dégazage tel que défini ci-dessus.

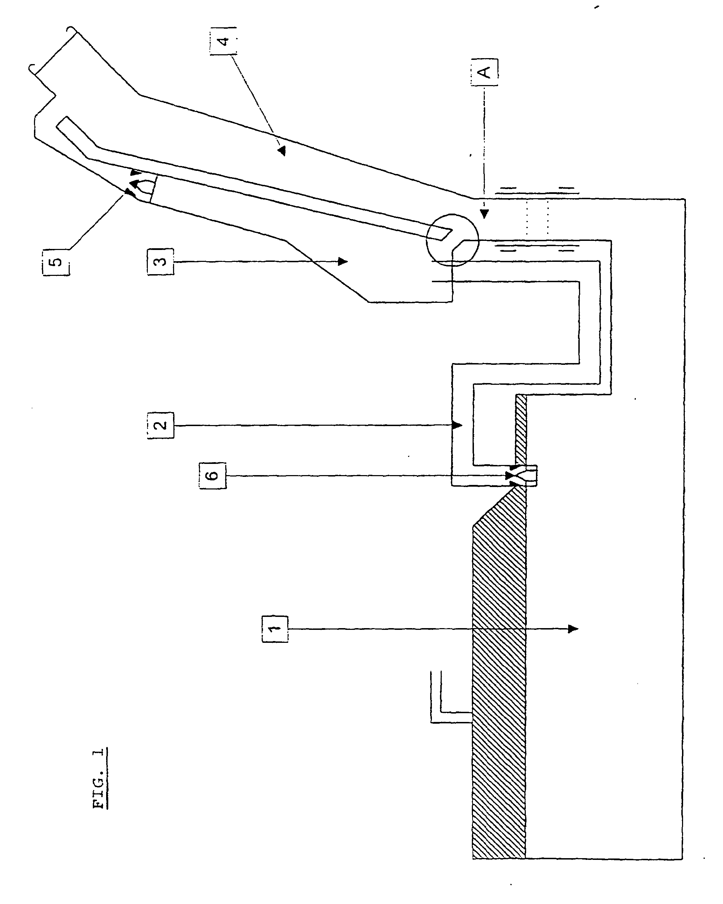

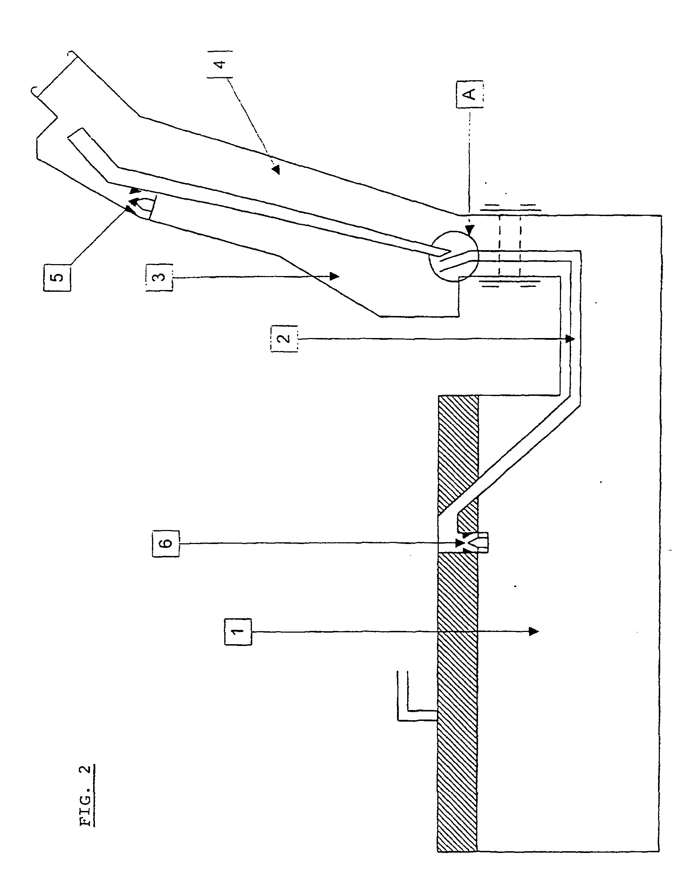

L'invention est illustrée de manière non limitative par les figures 1 et 2.

La figure 1 représente un circuit de dégazage selon l'invention, externe au réservoir à carburant pour véhicule automobile, et muni de deux clapets à flotteur.

Le réservoir à carburant (1) comprend un circuit de dégazage (2) présentant une section en forme de siphon et une capacité de séparation liquide / gaz (3). Lors du remplissage du réservoir (1) par le conduit de remplissage (4), les gaz contenus dans le réservoir sont évacués par le circuit de dégazage (2). Le niveau de remplissage maximum du réservoir est tel qu'il laisse au dessus du niveau de liquide, un volume suffisant à l'expansion des gaz contenus dans la partie supérieure du réservoir. Lorsque ce niveau maximal est atteint, le clapet à flotteur (6) positionné à l'extrémité de la conduite de dégazage du côté réservoir réduit le risque de pénétration de liquide dans le siphon. De même, en utilisation, lors d'une inclinaison ou à la création de vagues dans le réservoir, le clapet (6) réduit également le risque de pénétration de liquide dans le siphon.

Malgré la présence du clapet à flotteur (6), du liquide peut être entraîné dans le circuit de dégazage et s'accumuler dans le siphon ou dans la capacité de séparation liquide / gaz (3). Pour permettre la purge de ce liquide, une communication (A) relie la base de la capacité de séparation liquide / gaz (3) et le conduit de remplissage (4). Au niveau de cette communication (A), le conduit de remplissage (4) présente un rétrécissement créant un effet Venturi favorisant la purge de la phase liquide lors du remplissage du réservoir (1).

Un autre clapet à flotteur (5), positionné entre la partie supérieure de la capacité de séparation liquide / gaz et la liaison supérieure entre le conduit de dégazage et le conduit de remplissage, réduit le risque d'éjections de liquide hors du conduit de remplissage lors du remplissage du réservoir et de l'évacuation des gaz qu'il contient.

La figure 2 représente un circuit de dégazage selon l'invention, interne au réservoir, et comportant également deux clapets à flotteur.

Le mode de fonctionnement décrit ci-dessus pour la figure 1 est également d'application pour la figure 2.

## Revendications

1. Circuit de dégazage (2) pour réservoir à liquide (1), comprenant un conduit de dégazage reliant la partie supérieure du réservoir (1) à un point plus élevé, proche de l'extrémité supérieure du conduit de remplissage (4), via une section en forme de siphon et une capacité de séparation liquide / gaz (3) munie à sa base d'un dispositif de purge de la phase liquide présente dans le conduit de dégazage, dans lequel le dispositif de purge (A) met en communication le conduit de dégazage et le conduit de remplissage (4) **caracterisé en ce que** le dispositif de purge est associé à un dispositif créant un effet Venturi favorisant, lors du remplissage, la purge de la phase liquide présente dans le conduit de dégazage.

2. Circuit de dégazage (2) selon la revendication 1 dans lequel le réservoir à liquide (1) est un réservoir à carburant.

3. Circuit de dégazage selon l'une quelconque des revendications précédentes, dans lequel le dispositif de purge est placé à un niveau supérieur au niveau maximum de remplissage du réservoir.

4. Circuit de dégazage selon l'une quelconque des revendications précédentes, dans lequel le dispositif créant un effet Venturi consiste en un rétrécissement du conduit de remplissage (4) au niveau de sa communication (A) avec le conduit de dégazage.

5. Circuit de dégazage selon l'une quelconque des revendications précédentes, dans lequel le conduit de dégazage comprend en outre au moins un clapet à flotteur (5,6).

6. Circuit de dégazage selon la revendication 5, dans lequel un clapet à flotteur (5) est placé à la partie supérieure de la capacité de séparation liquide / gaz (3) ou entre cette partie supérieure de la capacité de séparation liquide / gaz (3) et la liaison supérieure entre le conduit de dégazage et le conduit de remplissage (4).

7. Circuit de dégazage selon la revendication 5 ou 6, dans lequel un clapet à flotteur (6) est placé à ou près de l'extrémité du conduit de dégazage du côté réservoir.

8. Réservoir à liquide équipé d'un circuit de dégazage selon l'une quelconque des revendications précédentes.

## Patentansprüche

1. Entlüftungskreis (2) für Flüssigkeitsbehälter (1) mit einer Entlüftungsleitung, welche den oberen Teil des Behälters (1) an einem hochgelegenen Punkt nahe dem oberen Ende der Einfülleitung (4) über einen Abschnitt in Form eines Siphons verbindet, und einen Raum zum Trennen von Flüssigkeit/Gas (3), der an seiner Basis mit einer Auslaßvorrichtung für die in der Entlüftungsleitung vorgesehene flüssige Phase versehen ist, wobei die Auslaßvorrichtung (A) die Entlüftungsleitung und die Fülleitung (4) in Verbindung setzt, **dadurch gekennzeichnet, daß** die Auslaßvorrichtung einer Vorrichtung zur Erzeugung eines Venturi-Effektes zugeordnet ist, welcher beim Füllen das Austreiben der in der Entlüftungsleitung vorhandenen flüssigen Phase begünstigt.

2. Entlüftungskreis (2) nach Anspruch 1, bei welchem der Flüssigkeitsbehälter (1) ein Kraftstoffbehälter ist.

3. Entlüftungskreis nach einem der vorhergehenden Ansprüche, bei welchem die Auslaßvorrichtung auf einer Höhe angeordnet ist, die größer ist als das maximale Füllniveau des Flüssigkeitsbehälters.

4. Entlüftungskreis nach einem der vorhergehenden Ansprüche, bei welchem die den Venturi-Effekt erzeugende Vorrichtung aus einer Verengung der Einfülleitung (4) auf der Höhe ihrer Verbindung (A) mit der Entlüftungsleitung besteht.

5. Entlüftungskreis nach einem der vorhergehenden Ansprüche, bei welchem die Entlüftungsleitung zumindest ein Schwimmerventil (5, 6) aufweist.

6. Entlüftungskreis nach Anspruch 5, bei welchem ein Schwimmerventil (5) im oberen Teil des Raumes zur Trennung von Flüssigkeit/Gas (3) vorgesehen ist, oder zwischen diesem oberen Teil des Raumes zum Trennen von Flüssigkeit/Gas (3) und der oberen Verbindung zwischen der Entlüftungsleitung und der Einfulleitung (4).

7. Entlüftungskreis nach Anspruch 5 oder 6, bei welchem ein Schwimmerventil (6) an oder nahe dem flüssigkeitsbehälterseitigen Ende der Entlüftungsleitung vorgesehen ist.

8. Flüssigkeitsbehälter mit einer Entlüftungsleitung nach einem der vorhergehenden Ansprüche.

## Claims

1. Degassing circuit (2) for a liquid tank (1), comprising a degassing duct connecting the upper part of the tank (1) to a higher point, close to the upper end of the filling duct (4), via a section in the form of a syphon and a liquid/gas separating volume (3) provided at its base with a device for purging the liquid phase present in the degassing duct, in which the purging device (A) brings the degassing duct into communication with the filling duct (4), **characterized in that** the purging device is combined with a device creating a Venturi effect conducive, when filling, to purging the liquid phase present in the degassing duct.

2. Degassing circuit (2) according to Claim 1, in which the liquid tank (1) is a fuel tank.

3. Degassing circuit according to either of the preceding claims, in which the purging device is placed at a level above the maximum filling level of the tank.

4. Degassing circuit according to any one of the preceding claims, in which the device creating a Venturi effect consists of a narrowing of the filling duct (4) at the point (A) where it communicates with the degassing duct.

5. Degassing circuit according to any one of the preceding claims, in which the degassing duct furthermore comprises at least one float valve (5, 6).

6. Degassing circuit according to Claim 5, in which a float valve (5) is placed in the upper part of the liquid/gas separating volume (3) or between this upper part of the liquid/gas separating volume (3) and the upper connection between the degassing duct and the filling duct (4).

7. Degassing circuit according to Claim 5 or 6, in which a float valve (6) is placed at or near that end of the degassing duct which is on the tank side.

8. Liquid tank equipped with a degassing circuit according to any one of the preceding claims.
